# EUROPEAN PATENT SPECIFICATION

(11) **EP 2 129 746 B1**
(45) Date of publication and mention of the grant of the patent: **30.03.2016**
(21) Application number: 07711115.1
(22) Date of filing: 04.04.2007
(51) Int. Cl.: C10G 3/00, C10G 32/02, C10G 71/00

(54) **A PROCESS FOR THE PRODUCTION OF ALIPHATIC AND CYCLIC HYDROCARBONS**
VERFAHREN ZUR HERSTELLUNG VON ALIPHATISCHEN UND CYCLISCHEN KOHLENWASSERSTOFFEN
PROCEDE DE PRODUCTION D'HYDROCARBURES ALIPHATIQUES ET CYCLIQUES

(43) Date of publication of application: 09.12.2009
(73) Proprietor: AIKONA LTD, London N1 7GU (GB)
(72) Inventor: VASICEK, Alois, 110 00 Praha 1 (CZ)
(74) Representative: Jirotkova, Ivana
(86) International application number: PCT/CZ2007/000023
(87) International publication number: WO 2008/122250

(56) References cited:
- US-A- 4 102 938

## Description

### Technical Field

The invention relates to a process for the production of aliphatic and cyclic C₁ to C₂₅ hydrocarbons by catalytic deoxidation of natural substances or mixtures thereof, in particular based on fatty acids, alcohols, saccharides, and lipids. Fats and waxes are preferred lipids.

### Background Art

The search for alternative fuels for internal-combustion engines is among priority areas pursued by many renowned institutions.

This trend is driven by the reducing petroleum reserves and ever-increasing consumption of fuels. Current status of technology is restrained by the existing possibilities of transforming energy contained, in particular, in liquid and gaseous fuels into mechanical work. Among facilities used for this energy conversion, internal-combustion engines play a prominent role due to their low weight and mobility.

The range of sources for alternative methods of production of internal combustion engine fuels reduces to renewable sources, whose quantities are not dependent upon the ever-decreasing reserves and are only determined by the possibilities of their reproduction. Such renewable sources of liquid and gaseous fuels include vegetation and vegetation-based natural products such as vegetable oils and sugars and products of their processing such as glycerol as waste from the manufacture of soaps from fats, linear esters, waxes, and the like. However, current status of technology of obtaining gaseous and liquid hydrocarbons is limited by our insufficient ability to convert a solid or a highly viscous liquid into a liquid fuel whose properties are well suited to its application in internal-combustion engines.

However, the idea that liquid or gaseous fuels should be obtained from natural substances was never abandoned, despite the inherent technological and economic problems. Various technologies, in particular based on modified pyrolysis processes, produce, for instance, methanol, which is used as a petrol additive. Similarly, fermentation technologies producing ethanol from cereals, potatoes or sugar are being developed with the aim to replace methanol, obtained from fossil material, with ethanol from renewable sources. However, high investment costs and a rather low degree of conversion of the raw materials into the desirable products are limitations precluding a marked increase in the production of such valuable petrol additives.

On the other hand, the production of so-called "biofuel" for diesel engines is being used and pursued quite extensively. This production is based on the use of vegetable oils, animal fats and/or fatty acids obtained from them. These processes, stimulated by their economic aspects, are based on the similarity between the chemical structures of conventional fuels and the replacement substances. The best-known replacement for diesel fuel benefits from the similarity of the chemical structure of n-alkanes in engine fuel with the linear chain of fatty acid methyl ester. However, fatty acid methyl esters for alternative fuels are not produced in chemically identical modifications; in fact, they are usually referred to as methyl esters of the fats in question. Rape-seed oil methyl ester is the best-known methyl ester in this technical field. Methyl esters of soybean oil, palm oil, castor oil, hemp-seed oil and other oil types are well known and being used as well.

It may seem that in the domain of uses of oils and fats in general for the manufacture of alternative fuels for internal-combustion engines, all problems have been solved, except that the ester group introduces undesirable properties as regards the freezing point of the fuel and that the specific energy of the product per unit weight is lowered by the presence of the two oxygen atoms in a molecule of the ester.

The technology of manufacture of fatty acid methyl esters is relatively simple: a fatty acid triglycerol is re-esterified with methanol in the alkaline medium of sodium or potassium methanolate and a methyl ester and glycerol are formed. This process comprises am equilibrium reaction at a temperature above the boiling temperature of methanol. Therefore, the reaction takes a relatively long time and methanol is returned back to the reaction vessel from a reflux condenser. Glycerol is removed from the solution and represents a by-product whose use potential is very limited.

This re-esterification by-product - glycerol - causes an environmental problem reducing the economic effectiveness of the manufacturing process. It comes from the manufacturing process as an aqueous solution containing above 50 wt. % glycerol plus residual fatty acids, methanol, and other substances, particularly alkali salts and hydroxides. Purification of this glycerol phase is very difficult and costly and therefore many methyl ester producers have it disposed of by incineration, being willing to pay for this disposal.

The negative properties of vegetable oil methyl esters, in particular rape-seed oil methyl ester, are made for by the addition of various substances lowering the freezing temperature and improving the low-temperature filtering ability of the product. Nevertheless, no universal solution to the applicability of oils as renewable sources in the manufacture of diesel fuels has been found so far.

Due to their structural similarity with n-alkanes used as diesel fuels, fatty acids are also used as feeding materials in other processes, particularly such as are based on reduction reactions in acid media, using hydrogen as the reducing agent and obtaining hydrocarbons as the products. Due to their high cost and relative complexity of the process, such methods have not found wide practical application up to now.

US-A-4,102,938 discloses a process for preparing hydrocarbons using vegetable oil as starting compound/mixture, however the document does not use any radiation source.

### Disclosure of Invention

The drawbacks of the existing processes for the manufacture of gaseous and liquid fuels from natural substances are eliminated in the process of manufacture of aliphatic and cyclic hydrocarbons having C₁ to C₂₅ atoms in molecule by deoxidation of natural substances or mixtures thereof, particularly such as are based on fatty acids, alcohols, saccharides, or lipids, preferably fats and waxes - wherein the natural substance or mixture of natural substances is mixed with a deoxidation agent in the first step and, in the second step, this mixture so obtained is treated with local gradient field of co-acting infrared and magnetoelectric radiations, generated by their source which is immersed in the mixture.

Due to the action of this local radiation upon the reaction mixture of a natural substance in a deoxidation agent selected from the group of substances based on heavy petroleum fractions, mineral oils, natural oils or molten natural fats or mixtures thereof, the deoxidation agent is activated in the points of highest intensity of the local infrared and magnetoelectric radiation and a reaction is initiated after which the oxygen in the chemical structure of the natural substance is transferred to the structure of the deoxidation agent. The products obtained have a chemical structure corresponding to the aliphatic remainders of the structure of the organic matter after removal of the oxidized functional groups and a structure in the form of cyclic unsaturated hydrocarbons and their derivatives forming from the recombination of the decomposition products of the oxidized segments of the structure of the entering natural substance with the structures of the reaction products of the deoxidation reaction. Due to the lower molecular weight, reduced to substances having C₁ to C₂₅ carbon atoms in a molecule, the two components are considerably more volatile than the substances in the starting reaction mixture and they expand vigorously into points of lower or zero intensity of the local gradient field, whereby the reaction mixture is mixed and the unreacted natural substance in mixture with the deoxidation agent is brought to the points of highest gradient field intensity. In this manner the process of deoxidation of the natural substance proceeds as long as the latter is present in the non-decomposed state or in the form of its decomposable fragments. The temperature increases due to the action of the local gradient field and to the effect of the deoxidation reaction itself. After the temperature has increased to above the boiling temperatures of the individual compounds being formed, their vapours are brought to the space above the reaction mixture, from where said products are fed to the next technological steps of their treatment. The steps consist of condensation and/or rectification.

In this patent application, the term "fatty acids" means any organic compound consisting of a hydrocarbon chain with a terminal carboxy group (-COOH).

The term "alcohols" means any organic compound containing the -OH group.

The term "saccharides" means any organic compound defined as a sugar, having a simple structure or an oligomeric structure.

The term "lipids" means any ester of a carboxylic acid, preferably ester of a fatty acid, i.e. a fat and wax.

The deoxidation agent comprises a liquid carrier selected from the group of substances based on heavy petroleum fractions, mineral oils, natural oils or molten natural fats or mixtures thereof.

Preferably, the deoxidation agent can be further enriched with a dispersed addition of elemental carbon in amounts from 0.1 wt.% to 60 wt.%.

Preferably, this elemental carbon encompasses at least one substance selected from the group containing graphite, carbon black, charcoal, coke, and anthracite, having particle size lower than 5 micrometres.

In order to selectively increase the yield of one of the products formed, it is preferable to add, in the first step, a catalytically acting addition of dispersed organic salts in an amount from 0.01 wt.% to 10 wt.% with respect to the amount of the deoxidation agent. This addition consists of at least one substance selected from the group of substances whose cation comprises at least one element, preferably selected from the group of elements comprising Ni, Cr, Fe, Zn, Co, Pb, Cd, Pt, Pd, Cu, Na, K, Ca.

The local gradient field of co-acting infrared and magnetoelectric radiation is a result of action of an electric current passing through a low-resistance conductor located in an electrically conductive liquid homogeneous medium whose specific resistance is higher than that of the conductor. If electric current passes through the conductor, then (1) the conductor is heated and (2) the matter in the immediate vicinity of the conductor is subject to electric and magnetic activation. This field of co-acting infrared, magnetic and electric radiations is an inhomogeneous field whose intensity is highest in the conductor axis as regards the former two components and in a direction perpendicular to the conductor axis as regards electric field. If the radiation intensity is sufficiently high and the material of the conductor has a suitable composition, then conditions arise for the initiation of the deoxidation reaction, which proceeds best if the conductor consists of a metal or an alloy of metals selected from the group comprising iron, chromium, nickel, copper, platinum and tungsten. Iron is preferable.

Preferably, condensation of the products is followed by degassing of the condensate.

The rectification process provides products divided by the ranges of the boiling temperatures of the components into a gas phase, one or more lower-boiling and high-boiling fractions and a distillation residue.

The distillation residue, which contains a fraction of products with a low degree of deoxidation, can be preferably recycled to the first step of the process to complete its deoxidation.

The radiation of the local gradient field can be excited by the passage of a dc or ac current, the pulse mode being preferable.

According to invention neither the products of deoxidation of natural substances are chemically identical nor the feeding materials are chemically identical. Like petroleum derivatives, the resulting product is defined by its physical properties. The separation of the mixed product into fractions by rectification does not imply that substances which, although derived from the starting substance, are not deoxidized completely cannot be present. In fact, they are present in the mixed product mainly as alcohols, ketones and aldehydes. Therefore, in this case also, the products are defined first by the limiting boiling temperatures of the fractions and subsequently by their average chemical composition, which is actually an orientational information only; this, however, is common practice in the domain of fuels.

The deoxidation of vegetable oils and fats results practically in three fractions. The gaseous fraction with boiling temperature up to 65°C comprises aliphatic hydrocarbons with variable amounts of propylene, formaldehyde, carbon monoxide, hexene and hexadienes, in particular the isomeric branched forms. The second fraction, having the boiling temperature range of 65°C to 125°C, comprises isomeric forms of nonene, nonadiene and their branched forms, as well as cyclic derivatized cyklohexene and derivatized cyklohexanone. The third fraction, with the boiling temperature range of 125°C to 260°C, consists mainly of linear saturated and unsaturated C₁₂ to C₂₅ hydrocarbons, the composition being variable in dependence on the type of oils used. Deoxidation of fatty acids yields practically only this third fraction directly, because according to various embodiments of the invention where the natural substance was represented by a mixture of fatty acids, about 96 % of a product whose boiling temperature lay within the range of 125°C to 260°C was obtained. The remaining part was a volatile fraction containing mainly carbon monoxide and formaldehyde.

On the other hand, a gaseous fraction was solely obtained from the treatment of glycerol and ethanolic, propanolic and butanolic waste waters according to another embodiment of the invention. The proportion of the liquid fraction was higher than 6 % only during the deoxidation of glycerol. This fraction contained more than 50 % cyclic hydrocarbons and derivatized cyklohexanone.

In the deoxidation of disaccharides, the output product was analyzed and consisted of a gaseous and middle fraction. The middle fraction, whose content was 67 %, contained, in addition to furfural derivatives, cyclic etheric compounds. The lower boiling fraction contained, apart from carbon monoxide (CO), methyl, ethyl, and methylcyclohexyl ethers.

### Best Mode for Carrying Out of the Invention

### Example 1

In the specific embodiment of a process according to invention, 1000 g of a vegetable oil and 1200 g of a deoxidation agent were added to a 5000 ml round-bottom flask equipped with a thermocouple, and the components were mixed by shaking at 50°C. The vegetable oil of non-defined composition was obtained by recycling used frying oils collected from restaurants. The deoxidation agent was based on a heavy petroleum fraction marketed by a firm Kaučuk Kralupy (Czech Republic) under the commercial name "Road asphalt". The source of local gradient field of co-acting infrared and magnetoelectric radiation had the form of a hollow coil 12 mm in diameter, wire length 1.3 m and diameter 0.7 mm. The wire composition was as follows: 8% Cr, 1% Ni, 91% Fe. This radiation source on a glass rod was placed on the bottom of the flask. Subsequently, 2 g of iron(III) stearate, 1 g of copper stearate and 5 g of wood charcoal (ground in a ball mill) were added and the mixture was shaken again. Then the flask was fitted with a Liebig condenser, and dc voltage 48 V was applied to the coil. In 55 sec of the voltage application, dark-green vapours whose temperature, identical with that of the liquid in the flask, was 110 °C, started to evolve. In the next 95 sec, the liquid started to boil vigorously and large amounts of brown-yellow vapours evolved and entered the condenser, where they condensed. The non-condensed fraction was collected in a plastic bag. In the next 14 minutes the electric current supply was disconnected because the boil had ceased by then and the flask was half-empty. The temperature of the liquid in the flask was 380°C at that moment. Mass balance was made. The condensate contained 912 g of a liquid. The weight of the gas phase was 75 g. The liquid phase was subjected to discontinuous rectification on a packed column with 20 theoretical plates. The weight of the fractions up to 65°C, up to 125°C, and up to 260°C was 60 g, 180 g, and 660 g, respectively. The distillation residue (about 100 g) was transferred back to the flask with the deoxidation mixture, mixed, and subjected to the reaction by applying voltage to the coil. In 10 minutes of action of the radiation, 45 g of a green-yellow liquid was obtained. Samples of the fractions were taken for gas chromatography-mass spectrometry analysis. The results are summarized in Table 1 below.

**Table 1**

| **Compound** | **wt.%** |
|---|---|
| | |

| **Gaseous fraction** | |
|---|---|
| carbon monoxide | 11.3 |
| formaldehyde | 7.2 |
| acrolein | 16.6 |
| propene | 23.7 |
| cyklohexene | 17.1 |
| 2,3-dimethylbutene | 19.8 |
| other (unspecified) | 4.3 |
| sum total | 100 |
| | |

| **Fraction b.t. up to 65°C** | |
|---|---|
| hexene | 65.1 |
| heptene | 17.5 |
| heptane | 11.7 |
| other | 5.7 |
| sum total | 100 |

| **Fraction b.t. 65°C - 125°C** | |
|---|---|
| nonane | 22.9 |
| 2-ethyl-2-propylcyclohexanone | 56.6 |
| decene | 11.3 |
| decane | 7.5 |
| other | 1.7 |
| sum total | 100 |
| | |

| **Fraction b. t. 125°C - 260°C** | |
|---|---|
| C₁₄ isomer | 7.1 |
| octadecene | 6.3 |
| tetramethylbenzene | 1.1 |
| eicosanol | 1.3 |
| hexadecanol | 1.7 |
| pentadecane | 9.6 |
| nonadecenol | 2.7 |
| pentadecanediol | 1.8 |
| 1-hexadecanol | 1.6 |
| pentadecane | 7.8 |
| dodecenol | 4.5 |
| pentadecene | 11.4 |
| heptadecene | 9.2 |
| heptadecane | 8.7 |
| heptadecene | 7.7 |
| hexadecanol | 1.7 |
| nonadecane | 1.3 |
| hexadecene | 9.2 |
| other | 5.3 |
| sum total | 100 |
| | |

| **Distillation residue** | |
|---|---|
| hexanoic acid | 11.9 |
| hexanoic acid (isomer) | 13.7 |
| octanoic acid | 22.3 |
| nonanoic acid | 21.3 |
| heptanoic acid | 20.1 |
| other | 10.7 |
| sum total | 100 |

### Example 2

In another specific embodiment of a process according to invention, 700 g of beet sugar and 1500 g of a deoxidation agent were added to a 5000 ml round-bottom flask equipped with 2 thermocouples to measure the temperature of the liquid and gas. The deoxidation agent was based on PP70 mineral oil marketed by firm PARAMO Pardubice (Czech Republic). The content was mixed and homogenized at 70°C by means of a hand stirrer. The source of local gradient field of co-acting infrared and magnetoelectric radiation had the form of a hollow coil 12 mm in diameter, wire length 1.3 m and diameter 0.7 mm. The wire composition was as follows: 8 % Cr, 1% Ni, 91% Fe. This source on a glass rod was placed on the bottom of the flask. Further, 5 g of iron(III) stearate, 5 g of copper stearate and 20 g of carbon black for the rubber industry were added to the flask and the mixture was mixed again. The flask was fitted with a Liebig condenser, and dc voltage 36 V was applied to the coil. In 65 sec of the voltage application, yellow-brown vapours whose temperature, identical with that of the liquid in the flask, was 130°C, started to escape. In another 165 sec, the liquid started to react vigorously and large amounts of brown-yellow vapours escaped and entered the condenser, where they condensed. The non-condensed fraction was collected into a plastic bag. In the next 20 minutes the electric current supply was disconnected because the boil had ceased by then and the content of the flask had diminished. The temperature of the liquid in the flask was 420°C at that moment. Mass balance was made. The condensate contained 420 g of a liquid. The weight of the gas phase was 152 g. The liquid phase was subjected to discontinuous rectification on a packed column with 20 theoretical plates. The weight of the fractions up to 65°C, up to 125°C, and up to 260°C, was 110 g, 220 g, and 50 g, respectively. The weight of the distillation residue was about 50 g. Samples of the fractions were taken for gas chromatography-mass spectrometry analysis. The results are given in Table 2 below.

**Table 2**

| **Compound** | **wt.%** |
|---|---|
| | |

| **Gaseous fraction** | |
|---|---|
| carbon dioxide | 1.1 |
| carbon monoxide | 8.3 |
| formaldehyde | 1.3 |
| butane | 11.1 |
| cyclopentene | 14.2 |
| butadiene | 3.2 |
| propene | 16.7 |
| other (non-specified) | 44.1 |
| sum total | 100 |
| | |

| **Fraction b. t. up to 65°C** | |
|---|---|
| cyklohexene | 17.1 |
| ethyl propyl ether | 5.1 |
| hexene | 17 |
| hexadiene | 18.5 |
| methanol | 1.3 |
| cyklohexene | 8.1 |
| other | 32.9 |
| sum total | 100 |
| | |

| **Fraction b. t. 65°C - 125°C** | |
|---|---|
| dodecadiene /triene | 14.1 |
| methylfurfural | 43.1 |
| di-methyl cyclopentyl ether | 27.3 |
| cyklohexene isopropyl isobutyl | 11.7 |
| other | 3.8 |
| sum total | 100 |
| | |

| **Fraction b. t. 125°C - 260°C** | |
|---|---|
| hexadecatriene (isopropyl, butyl) | 43.2 |
| hexadecenyl propyl ether | 32.1 |
| other | 24.7 |
| sum total | 100 |

### Distillation residue

### not analyzed (unsuitable to gas chromatography)

### Example 3

In another specific embodiment of a process according to invention, the reaction was carried out in a hermetic stainless steel autoclave having volume of 70 litres, equipped with inlet pipes with valves for feeding the liquid products at elevated temperatures. The bottom section of the autoclave, very close to the vessel bottom, accommodated the source of local gradient field of co-acting infrared and magnetoelectric radiation. This source was equipped with power supply wires, which were led out of the vessel through well sealing and electrically non-conductive bushings and connected to the power supply. The connection of the various radiation source circuits, the voltage supplied, and the periods during which the various parts of the radiation source were active could be varied. The radiation source itself consisted of a system of six coils wound on a toroidal core made of a ceramic material, 220 mm in diameter and 150 mm high. The coils were made of a stainless steel wire 0.5 mm in diameter.

The lid of the vessel was equipped with a fractionating column packed with ceramic Raschig's rings. The vapour outlet pipe was connected to a pair of condensers, one air cooled and the other water cooled. The temperature inside the reactor and the temperature of vapours were detected by means of two thermocouples and evaluated by a computer, which also recorded the time development of the reaction and the feeding of individual components.

25 litres of a deoxidation agent based on a heavy petroleum fraction heated at 60°C was filled into the autoclave then it was added 5 litres of non-refined rape-seed oil in which 200 g of a sodium soap, 100 g of copper stearate and 1 kg of ground coke had been dissolved in the hot state. The mixture was agitated in the autoclave and the autoclave was closed.

A reservoir of the feeding material was connected to the autoclave inlet pipe equipped with a outlet unit. The feeding material consisted of a waste glycerol fraction from the production of rape-seed oil methyl esters. This fraction contained 80% glycerol and 20% water plus some non-specified minority components.

The gradient field of co-acting infrared and magnetoelectric radiation was initiated by application of 380 V a.c. voltage. After reaching a temperature of 120°C inside the autoclave, the feeding of the feed material was started at a flow rate of 50 ml/s. The reaction mixture temperature started to increase rapidly. When the temperature of 250°C was reached, the first liquid appeared at the condenser outlet and the plastic bag connected to the outlet started to fill up. The equilibrium inlet and outlet flow rates were attained in 27 minutes of the start of the reaction. The dosage of the feeding material was increased step by step to reach 300 ml/sec in the equilibrium state. Additional 2 coils of the gradient field source were activated, whereupon the equilibrium established at a feeding rate of 970 ml/sec. The reaction mixture temperature in the equilibrium state was 383°C and the temperature of the vapours entering the condenser was 321 °C.

After 800 litres of the feeding material had been spent, the voltage supply was disconnected. In about 10 minutes the liquid ceased to flow out of the condenser and gases ceased to evolve. When the 5 m³ bag was full, the gaseous phase was led to a safe distance from the reservoir and ignited, whereby the excess non-accumulated output material was disposed of safely.

Material balance showed that 795 kg of the feeding material afforded 350 kg of a liquid and the remaining amount of a gas, whose quantity was not determined for the reason explained above. The composition of the products is shown in Table 3 below.

**Table 3**

| **Compound** | **wt.%** |
|---|---|
| | |

| **Gaseous fraction** | |
|---|---|
| carbon dioxide | 2.2 |
| carbon monoxide | 7.6 |
| formaldehyde | 1.2 |
| acrolein | 11.1 |
| propane | 3.1 |
| methanol | 1.3 |
| propene | 16.7 |
| cyklohexene | 17.1 |
| 2,3-dimethylbutene | 19.8 |
| other (not specified) | 19.9 |
| sum total | 100 |
| | |

| **Fraction b. t. up to 65°C** | |
|---|---|
| hexene | 35.3 |
| heptene | 3.1 |
| methanol | 24.6 |
| heptane | 3.3 |
| cyklohexene | 27.6 |
| other | 6.1 |
| sum total | 100 |
| | |

| **Fraction b. t. 65°C - 125°C** | |
|---|---|
| 2,8-dimethyldecene | 21.1 |
| 2-ethyl-2-propylcyklohexanone | 52.2 |
| nonane | 11.3 |
| isododecanes | 7.5 |
| other | 7.9 |
| sum total | 100 |

### Example 4

In another specific embodiment of a process according to invention, the equipment described in Example 3 above was used for a continuous deoxidation of 500 kg of a raw material obtained by acidification of waste soap water after drying approximately to a 15% moisture content. Before pouring into the autoclave, the material was heated at 85°C to melt. The material in the autoclave was subjected to deoxidation by using a deoxidation agent which was based on a heavy petroleum fraction catalyzed by Fe and Cu salts. The radiation source was connected to a 3 x 380 V a.c. current supply. In the equilibrium state, the temperature inside the autoclave was 410°C and the temperature of the vapours leaving the reactor was 322°C.

In 28 minutes of the process, 395 kg of a light-green fluid and approximately 5 kg of gas were obtained. Fractional distillation gave 10 kg, 18 kg, and 350 kg of fractions having boiling temperatures up to 65°C, 65°C - 125°C, and 125°C - 260°C, respectively. The largest fraction contained n-alkanes solely. Therefore, this fraction was used as diesel fuel; its cetane number was 83.

### Example 5

The equipment described in Example 3 was used and the conditions described in Example 4 were applied to deoxidize waste fat from sumps of a meat processing plant. The material processed consisted of 120 kg of the impure fat with 30 % moisture, and the reaction took 20 minutes. The amount of liquid products obtained was about 60 kg. In the dominant fraction, the boiling temperatures lay within the range of 125°C - 260°C and the average molecular weight of this fraction corresponded to alkanes with an average n-alkane chain length of 17.3 carbon atoms.

### Example 6

The equipment described in Examples 3 to 5 was used and the conditions described in Example 5 were applied to deoxidize 250 kg of palm oil recovered as a solid deposit from the bottom of a tank in a winding-up soap factory. The reaction, which took 38 minutes, gave 220 kg of liquid products, which were subjected to rectification to obtain 5.3% of a volatile fraction up to 65°C, 18.3% of a 65°C -125°C fraction, 61.6% of a 125°C - 260°C fraction, and a distillation residue. The predominant fraction was tested as diesel fuel: its freezing point was -25°C and filterability - 15°C.

Be aware that the above examples are intended to illustrate the invention without limiting its scope.

### Industrial Applicability

The above process for the production of aliphatic and cyclic hydrocarbons by catalytic deoxidation of natural substances or mixtures thereof, in particular based on fatty acids, alcohols, saccharides and lipids, preferably fats and waxes, can be used for the manufacture of alternative vehicle fuels and for other applications where petroleum-based products are used so far.

Moreover, the process can be used for processing natural substances or mixtures thereof in the majority fractions of various wastes and thus to dispose of them quite simply without producing wastes; thereby helping to alleviate the existing environmental problems.

## Claims

1. A process for the production of aliphatic and cyclic hydrocarbons having C₁ to C₂₅ atoms in a molecule by deoxidation of natural substances or mixtures thereof, based on fatty acids, alcohols, saccharides, lipids, fats or waxes, **characterized in that** the natural substance or mixture of natural substances is mixed with a deoxidation agent which comprises a liquid carrier selected from the group of substances based on heavy petroleum fractions, mineral oils, natural oils or molten natural fats or mixtures thereof, in the first step, and in the second step the mixture so obtained is treated with radiation of a local gradient field of co-acting infrared and magnetoelectric radiations generated by a radiation source which is immersed in the mixture, wherein during the reaction, the temperature of the reaction mixture is increased due to the action of the local gradient field of the above radiations, said temperature being controlled by the intensity of said field at a value exceeding the boiling temperatures of the individual components of the products being formed, resulting in transport of the vapours thereof above the surface of the reaction mixture, from where said products are fed to the next step of condensation and/or rectification.

2. The process according to Claim 1, **characterized in that** the natural substances or mixtures are based on fats or waxes.

3. The process according to Claim 1, **characterized in that** the deoxidation agent is further enriched with a dispersed admixture of elemental carbon in an amount from 0.1 to 60 % by weight.

4. The process according to Claim 3, **characterized in that** the elemental carbon is at least one substance selected from the group of substances comprising graphite, carbon black, charcoal, coke and anthracite, having particle size less than 5 micrometers.

5. The process according to any of the Claims 1 to 4, **characterized in that** in order to selectively increase the yield of any of the products being formed, a catalytically acting mixture of dispersed organic salts is added to the first step in an amount of 0.01 to 10 % by weight with respect to the amount of the deoxidation agent, said catalytically acting mixture comprising at least one substance, selected from the group of substances whose cation is formed by one element at least, selected from the group including: Ni, Cr, Fe, Zn, Co, Pb, Cd, Pt, Pd, Cu, Na, K, Ca.

6. The process according to any of the Claims 1 to 5, **characterized in that** the radiation of a local gradient field of co-acting infrared and magnetoelectric radiations is obtained by the action of electric current passing through a low-resistance conductor, which is located in an electrically conductive liquid homogeneous medium whose specific resistance is higher than that of the conductor, wherein the current passing through the conductor causes the conductor to heat up and electrically and magnetically activates matter immediately surrounding the conductor, thus forming an inhomogeneous field of co-acting infrared, magnetic and electric radiation with the highest intensity of the infrared and magnetic components in the conductor axis and with the highest intensity of the electric component in a direction perpendicular to the conductor axis.

7. The process according to Claim 6, **characterized in that** the radiation of the local gradient field is excited by the passage of direct or alternating current.

8. The process according to Claim 7, **characterized in that** the passage of direct or alternating current is in the pulse mode.

9. The process according to Claim 6, **characterized in that** the conductor material consists of a pure metal or of alloys consisting of metals selected from the group comprising iron, chromium, nickel, copper, platinum, vanadium and tungsten.

10. The process according to Claim 9, **characterized in that** the conductor material consists of a pure metal or of alloys comprising iron.

11. The process according to Claim 1, **characterized in that** the condensation step is followed by a condensate degassing step.

12. The process according to Claim 1, **characterized in that** the residue from rectification, also containing a fraction of products with a lower degree of deoxidation, is recycled to the first step of the process, for completing its deoxidation.

## Patentansprüche

1. Verfahren für die Herstellung von aliphatischen und zyklischen Kohlenwasserstoffen, die C₁ bis C₂₅ Atome in einem Molekül aufweisen, mittels Desoxidation von natürlichen Substanzen oder Mischungen davon, die auf Fettsäuren, Alkoholen, Sachariden, Lipiden, Fetten oder Wachsen basieren, **dadurch gekennzeichnet, dass** die natürliche Substanz oder Mischung von natürlichen Substanzen mit einem Desoxidationsmittel gemischt wird welches einen flüssigen Träger umfasst ausgewählt aus der Gruppe von Substanzen, die auf schweren Petroleumfraktionen, Mineralölen, natürlichen Ölen oder geschmolzenen natürlichen Fetten oder Mischungen davon basieren, in dem ersten Schritt, und die so erhaltene Mischung in dem zweiten Schritt mit Strahlung eines lokalen Gradientenfelds von zusammenwirkenden infraroten und magnetoelektrischen Strahlungen behandelt wird, die durch eine Strahlungsquelle erzeugt werden, welche in die Mischung eingetaucht ist, wobei die Temperatur der Reaktionsmischung während der Reaktion aufgrund der Wirkung des lokalen Gradientenfelds der obigen Strahlungen erhöht wird, wobei die Temperatur mittels der Intensität des Felds zu einem Wert gesteuert wird, der die Siedetemperaturen der individuellen Komponenten des Produkts, das gebildet wird, übersteigt, welches zum Transport von dessen Dämpfen über die Oberfläche der Reaktionsmischung führt, von wo die Produkte dem nächsten Schritt von Kondensation und/oder Rektifikation zugeführt werden.

2. Verfahren nach Anspruch 1, **dadurch gekennzeichnet, dass** die natürlichen Substanzen oder Mischungen auf Fetten oder Wachsen basieren.

3. Verfahren nach Anspruch 1, **dadurch gekennzeichnet, dass** das Desoxidationsmittel ferner mit einer dispergierten beimischung von elementarem Kohlenstoff in einer Menge von 0,1 bis 60 Gewichts-% angereichert ist.

4. Verfahren nach Anspruch 3, **dadurch gekennzeichnet, dass** der elementare Kohlenstoff zumindest eine Substanz ist, die aus der Gruppe von Substanzen ausgewählt ist, die Graphit, Kohlenstoffschwarz, Holzkohle, Koks und Anthrazit umfasst, die eine Partikelgröße von weniger als 5 Mikrometern aufweist.

5. Verfahren nach einem der Ansprüche 1 bis 4, **dadurch gekennzeichnet, dass,** um selektiv die Ausbeute von einem der Produkte, die gebildet werden, zu erhöhen, eine katalytische wirkende Mischung von dispergierten organischen Salzen zu dem ersten Schritt in einer Menge von 0,01 bis 10 Gewichts-% bezüglich der Menge des Desoxidationsmittels zugegeben wird, wobei die katalytisch wirkende Mischung zumindest eine Substanz umfasst, die aus der Gruppe von Substanzen ausgewählt ist, deren Kation zumindest durch -ein Element gebildet ist, das aus der Gruppe ausgewählt ist, die beinhaltet: Ni, Cr, Fe, Zn, Co, Pb, Cd, Pt, Pd, Cu, Na, K, Ca.

6. Verfahren nach einem der Ansprüche 1 bis 5, **dadurch gekennzeichnet, dass** die Strahlung eines lokalen Gradientenfelds von zusammenwirkenden infraroten und magnetoelektrischen Strahlungen mittels der Wirkung von elektrischem Strom erhalten wird, der durch einen Nledrigwiderstandsleiter durchläuft, welcher in einem elektrisch leitfähigen flüssigen homogenen Medium lokalisiert ist, dessen spezifischer Widerstand größer als der des Leiters ist, wobei der Strom, der durch den Leiter durchläuft, bewirkt, dass der Leiter erwärmt wird und unmittelbar den Leiter umgebende Materie elektrisch und magnetisch aktiviert, wodurch ein inhomogenes Feld von zusammenwirkender infraroter, magnetischer und elektrischer Strahlung mit der höchsten Intensität der infraroten und magnetischen Komponenten in der Leiterachse und mit der höchsten Intensität der elektrischen Komponente in einer Richtung senkrecht zu der Leiterachse gebildet wird.

7. Verfahren nach Anspruch 6, **dadurch gekennzeichnet, dass** die Strahlung des lokalen Gradientenfeldes mittels des Durchfluss von Gleich- oder Wechselstrom angeregt wird.

8. Verfahren nach Anspruch 7, **dadurch gekenntzeichnet, dass** der Durchfluss des Gleich- oder Wechselstroms im Pulsmodus ist,

9. Verfahren nach Anspruch 6, **dadurch gekennzeichnet, dass** das Leitermaterial aus einem reinen Element oder aus Legierungen besteht, die aus Metallen bestehen, die aus der Gruppe ausgewählt sind, die Eisen, Chrom, Nickel, Kupfer, Platin, Vanadium und Wolfram umfassen.

10. Verfahren nach Anspruch 9, **dadurch gekennzeichnet, dass** das Leitermaterial aus einem reinen Metall oder aus Legierungen besteht, die Eisen umfassen.

11. Verfahren nach Anspruch 1, **dadurch gekennzeichnet, dass** dem Kondensationsschritt ein Kondensat-Entgasungsschritt folgt.

12. Verfahren nach Anspruch 1, **dadurch gekennzeichnet, dass** der Rückstand von der Rektifikation, der auch eine Fraktion an Produkten mit einem niedrigen Desoxidatlonsgrad enthält, zu dem ersten Schritt des Verfahrenes recycelt wird, zur Vervollständigung dessen Desoxidation.

## Revendications

1. Un procédé pour la production d'hydrocarbures aliphatiques et cycliques, dont la molécule comporte de 1 à 25 atomes de carbone, par désoxydation de substances naturelles ou de leurs mélanges, à base d'acides gras, d'alcools, de saccharides, de lipides, de graisses ou de cires, **caractérisé en ce que** la substance naturelle ou le mélange de substances naturelles est mélangé avec un agent de désoxydation qui comprend un support liquide choisi dans le groupe de substances à base de fractions de pétrole lourd, d'huiles minérales, d'huiles naturelles ou de graisses naturelles fondues ou de leurs mélanges dans la première étape et dans la seconde étape, le mélange ainsi obtenu est traité avec des radiations d'un champ de gradient local de radiations infrarouges et magnéto-électriques coopérantes générées par une source de radiations qui est immergée dans le mélange, procédé dans lequel au cours de la réaction, la température du mélange réactionnel est augmentée grâce à l'action du champ de gradient local des radiations ci-dessus, ladite température étant commandée par l'intensité dudit champ à une valeur supérieure aux températures d'ébullition des composants individuels des produits qui se sont formés, ce qui entraîne le transport des vapeurs de ceux-ci au-dessus de la surface du mélange réactionnel, d'où lesdits produits sont acheminés vers l'étape suivante de condensation et/ou de rectification.

2. Le procédé selon la revendication 1, **caractérisé en ce que** les substances naturelles ou leurs mélanges sont à base de graisses ou de cires.

3. Le procédé selon la revendication 1, **caractérisé en ce que** l'agent de désoxydation est en outre enrichi avec un mélange dispersé de carbone élémentaire en une quantité de 0,1 à 60% en poids.

4. Le procédé selon la revendication 3, **caractérisé en ce que** le carbone élémentaire est au moins une substance choisie dans le groupe des substances comprenant le graphite, le noir de carbone, le charbon, le coke et l'anthracite, ayant une taille particulaire inférieure à 5 micromètres.

5. Le procédé selon l'une quelconque des revendications 1 à 4, **caractérisé en ce qu'**afin d'augmenter sélectivement le rendement de l'un quelconque des produits qui s'est formé, un mélange catalytiquement actif de sels organiques dispersés est ajouté dans la première étape en une quantité de 0,01 à 10% en poids par rapport à la quantité d'agent de désoxydation, ledit mélange catalytiquement actif comprenant au moins une substance, choisie dans le groupe des substances dont le cation est formé par un élément au moins, choisi dans le groupe comprenant: Ni, Cr, Fe, Zn, Co, Pb, Cd, Pt, Pd, Cu, Na, K, Ca.

6. Le procédé selon l'une quelconque des revendications 1 à 5, **caractérisé en ce que** les radiations d'un champ de gradient local de radiations infrarouges et magnéto-électriques coopérantes est obtenu par action du courant électrique passant par un conducteur de faible résistance, qui est situé dans un milieu homogène liquide électriquement conducteur dont la résistance spécifique est plus élevée que celle du conducteur, procédé dans lequel le courant passant par le conducteur en provoque le réchauffement et active électriquement et magnétiquement la matière entourant immédiatement le conducteur, formant ainsi un champ non-homogène de radiations infrarouge, magnétique et électrique coopérantes préserttant selon l'axe du conducteur la plus grande intensité des composantes infrarouges et magnétiques et dans la direction perpendiculaire à l'axe du conducteur la plus grande intensité de la composante électrique.

7. Le procédé selon la revendication 6, **caractérisé en ce que** les radiations du champ de gradient local est excité par le passage de courant continu ou alternatif.

8. Le procédé selon la revendication 7, **caractérisé en ce que** le passage de courant continu ou alternatif est dans le mode pulsé.

9. Le procédé selon la revendication 6, **caractérisé en ce que** le matériau conducteur est constitué d'un métal pur ou d'alliages de métaux, choisis dans le groupe comprenant le fer, le chrome, le nickel, le cuivre, le platine, le vanadium et le tungstène.

10. Le procédé selon la revendication 9, **caractérisé en ce que** le matériau conducteur consiste en un métal pur ou des alliages comprenant du fer.

11. Le procédé selon la revendication 1, **caractérisé en ce que** l'étape de condensation est suivie d'une étape de dégazage des condensats.

12. Le procédé selon la revendication 1, **caractérisé en ce que** le résidu de la rectification, qui contient également une fraction de produits à faible degré de désoxydation, est recyclé dans la première étape du procédé, pour compléter sa désoxydation.
